(19) Europäisches Patentamt
European Patent Office
Office européen des brevets

(11) **EP 2 455 207 B1**

(12) **EUROPEAN PATENT SPECIFICATION**

(45) Date of publication and mention
of the grant of the patent:
**30.07.2014 Bulletin 2014/31**

(51) Int Cl.:
***B29C 45/52*** *(2006.01)*     ***B29C 45/60*** *(2006.01)*
***C23C 26/02*** *(2006.01)*     ***C22C 29/14*** *(2006.01)*
***C23C 4/06*** *(2006.01)*

(21) Application number: **11009108.9**

(22) Date of filing: **17.11.2011**

(54) **Screw and manufacturing method thereof**

Schnecke und Herstellungsverfahren dafür

Vis et son procédé de fabrication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2010 JP 2010258140
04.11.2011 JP 2011242300**

(43) Date of publication of application:
**23.05.2012 Bulletin 2012/21**

(73) Proprietor: **SUMITOMO HEAVY INDUSTRIES, LTD.
Tokyo 141-6025 (JP)**

(72) Inventors:
• **Nishizawa, Seiji**
**Yokosuka-shi**
**Kanagawa 237-8555 (JP)**
• **Tanno, Yasuo**
**Yokosuka-shi**
**Kanagawa 237-8555 (JP)**
• **Kurosawa, Takashi**
**Yokosuka-shi**
**Kanagawa 237-8555 (JP)**

(74) Representative: **Emde, Eric**
**Wagner & Geyer**
**Gewürzmühlstrasse 5**
**80538 München (DE)**

(56) References cited:
**WO-A1-97/12743     JP-A- 2 070 051**

• **H-D STEFFENS ET AL: "Molybdän als
Spritzwerkstoff", SCHTREIÃ EN U. SCHNEIDEN,,
vol. 15, no. 3, 1 January 1963 (1963-01-01), pages
97-106, XP001310561,**
• **JOHNER G ET AL: "VERSCHLEISSSCHUTZ
DURCH THERMISCHES SPRITZEN
WOLFRAMKARBIDHALTIGER
METALLSCHICHTEN", METALLOBERFLACHE,
CARL HANSER VERLAG. MUNCHEN, DE, vol. 44,
no. 9, 1 September 1990 (1990-09-01), pages
451-454, XP000176368,**

EP 2 455 207 B1

**Description**

FIELD OF THE INVENTION

The present invention relates to a screw used in an injection apparatus and a manufacturing method of such a screw.

BACKGROUND ART

Generally, an injection apparatus of an injection molding machine is configured and arranged to inject a molding material (such as a resin), which is heated and melted in a heating cylinder, from an injection nozzle to fill the molding material into a cavity space of a mold apparatus.

A screw provided in an injection apparatus usually includes a screw tip, a screw body, a check ring arranged outside the screw tip in a diametrical direction, and a seal ring provided between the screw body and the screw tip, etc., (for example, refer to Japanese Laid-Open Patent Application No. 2007-290284). The screw is provided in the heating cylinder such that the screw is rotatable and also movable forward and backward. The check ring is movable in an axial direction within the heating cylinder and is capable of contacting to and separating from the seal ring. The check ring and the seal ring together play a role of suppressing a mold material existing in front of the screw tip from reverse-flowing to a rear side when the screw moves forward in the heating cylinder to inject the mold material from the injection nozzle.

In an injection molding machine having the above-mentioned structure, the component parts of the injection apparatus, such as the screw tip, the reverse-preventing ring, the seal ring, etc., continuously repeat sliding and/or contacting each other while the injection molding machine is in operation. Thus, if the injection molding machine is operated for a long time, there may be a case where abrasion of those parts causes a problem.

JP 2 070051 A discloses a manufacturing method of a screw involving powder spray. The method comprises preparing a first powder, mixing that first powder and a second power to obtain a spray powder and forming a sprayed film on at least a portion of a check ring by spraying the spray powder.

WO 97/12743 A1 discloses in the context of a return flow shut-off device a screw considered in drafting claim 4 in the two-part form.

It is a general object of the present invention to provide a screw and a manufacturing method of a screw, in which the above-mentioned problem is eliminated.

A more specific object of the present invention is to provide a screw and a manufacturing method of a screw, which can effectively prevent abrasion and wearing of the component parts of the screw.

In order to achieve the above-mentioned object, there is provide according to one aspect of the invention a manufacturing method of a screw, comprising: preparing a first powder and a second powder, the first powder containing 5 wt% to 9 wt% of boron (B), 9 wt% to 11 wt% of chrome (Cr), 4 wt% to 5 wt% of silicon (Si), and nickel (Ni), the second powder containing a metal element M, the second powder being tungsten (W) and/or molybdenum (Mo); mixing the first powder and the second powder to obtain a spray powder having a molar ratio of M and B ranging from 0.75:1 to 1:1; forming a sprayed film on at least a portion of one of a screw tip, a check ring and a seal ring by spraying the spray powder; and heat-treating the sprayed film to form a boride Ni(MxBy).

There is provided according to another aspect of the invention a screw comprising: a screw tip; a screw body; a seal ring provided between the screw tip and screw body; a check ring including a front end and a rear end and arranged so that the front end is on a side of the screw tip and the rear end is on a side of the seal ring; and a sprayed film provided on at least one of a contacting position of the screw tip where the screw tip contacts with the front end of the check ring, a contact position of the check ring where the front end of the check ring contacts with the screw tip, a contact position of the check ring where the rear end of the check ring contacts with the seal ring, and a contact position of the seal ring where the seal ring contacts with the rear end of the check ring, the sprayed film containing boride Ni(MxBy), where M is molybdenum and/or tungsten, and an amount of boron (B) is in a range of 6 wt% to 8 wt%.

According to the present invention, a screw and a manufacturing method of a screw, which can significantly prevent abrasion and waste of the component parts of the screw due to abrasion and contact of the component parts, can be achieved.

BRIEF DESCRIPTION OF THE DRAWINGS

FIG. 1 is a cross-sectional view of an injection apparatus provided with a screw according to an embodiment of the present invention;
FIG. 2 is a flowchart of a manufacturing method of the screw; and

FIG. 3 is an illustration of an abrasion resistance evaluation test apparatus.

MODE FOR CARRYING OUT THE INVENTION

A description will be given below, with reference to the drawings, of an embodiment of the present invention.

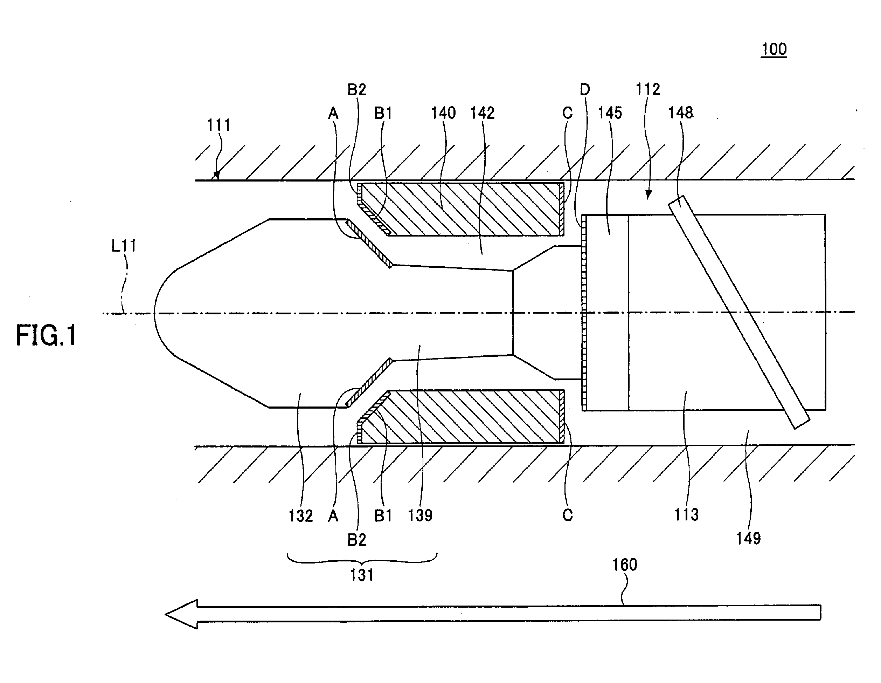

FIG. 1 is a cross-sectional view of an injection apparatus equipped with a screw according to an embodiment of the present invention.

As illustrated in FIG. 1, the ejection apparatus 100 equipped with the screw manufactured by the manufacturing method according to the present invention includes a screw 112 provided in a heating cylinder 111. The heating cylinder 111 includes a cylinder member having a longitudinal axis L11. A molding material (for example, a resin) is supplied from a hopper (not illustrated in the figure) to the heating cylinder 111. The screw 112 is rotatable within the heating cylinder 111, and also is movable forward and backward along the longitudinal axis L11 in the heating cylinder 111.

The screw 112 includes a screw body 113, a screw tip 131, a check ring 140, and a seal ring 145. The screw body 113 has a spiral channel 149 along a spirally formed flight 148 protruding in a diametrically outward direction. The screw tip 131 is attached to the front end of the seal ring 145, and has a tip part 132 and a reduced-diameter part 139. A plurality of horizontal grooves (not illustrated in the figure) are formed on the tip part 132 of the screw tip 131 in parallel to the longitudinal axis L11. The check ring 140 is provided outside in a diametrical direction of the diameter-reduced part 139 of the screw tip 131. The check ring 140 is movable forward and backward in the direction of the longitudinal axis L11 of the screw 11. The seal ring 145 is arranged between the screw body 113 and the diameter-reduced part 139 of the screw tip 131, which is between the screw body 113 and the check ring 140.

While the injection apparatus is in operation, the screw 112 is rotated by being driven by a motor (not illustrated in the figure). Thereby, the molding material supplied from the hopper (not illustrated in the figure) to the heating cylinder 111 moves forward within the spiral channel 149 in a direction of arrow 160 in FIG. 1. The molding material is melted and kneaded while being moved forward in the heating cylinder 111.

The front end of the check ring 140 is brought into contact with the rear end of the tip part 132 of the screw tip 131 due to a pressure of the molding material. Thus, the molding material flows through a gap 142 between the check ring 140 and the diameter-reduced part 139 of the screw tip 131, and further passes through the horizontal grooves of the tip part 132. Then, the molding material is accumulated in front of the tip part 132 of the screw tip 131, and the screw 112 moves backward due to accumulation of the molding material.

Then, when the motor (not illustrated in the figure) is driven, the screws 112 moves forward in the direction indicated by the arrow 160. Thereby, the molding material accumulated in front of the screw tip 131 is injected from the injection nozzle (not illustrated in the figure) and is filled into a cavity space of the mold apparatus (not illustrated in the figure). Thereafter, the molding material is cooled and cured in the cavity space, and a mold product is formed in the mold apparatus.

In the above-mentioned operation, when injecting the molding material from the injection nozzle, a part of the molding material, which has been accumulated in front of the screw tip 131, tends to reversely flow in a backward direction.

In this case, however, the rear end of the check ring 140 is pressed against the front end of the seal ring 145 due to a reverse-flow pressure of the molding material. Accordingly, a front side and a rear side of the contacting part where the seal ring 145 and the check ring 140 are in contact with each other are closed, thereby preventing the molding material from reverse-flowing in the backward direction in the heating cylinder 111. In order to prevent the check ring 140 from being removed from the screw 112, the inner diameter of the check ring 140 is set smaller than the inner diameter of the tip part 132 of the screw tip 131.

Here, in a conventional injection molding machine, component parts of a screw, such as a tip part of a screw tip, a check ring, a seal ring, etc., continuously repeat sliding and/or contacting each other. Thus, after operating the injection molding machine for a long time, waste of those component parts due to abrasion and contact may cause a problem.

However, the screw 112 according to the present embodiment has a feature in that a sprayed film is provided to a contact part of at least one of the tip part 132 of the screw tip 131, the check ring 140, and the seal ring 145.

For example, in the example of FIG. 1, the sprayed film is provided to an area A of the tip part 132 of the screw tip 131 where the tip part 132 contacts with the check ring 140, an area B1 of the check ring 14 where the check ring 14 contacts with the tip part 132 of the screw tip 131, an area C of the check ring 140 where the check ring 140 contacts with the seal ring 145, and an area D of the seal ring 145 where the seal ring 145 contacts with the check ring 140. Further, in the example illustrated in FIG. 1, a sprayed film is provided also to an area B2 of the check ring 140 where the tip part 132 of the screw tip 131 does not directly contact with the check ring 140.

The sprayed film contains metal boride Ni(MxBy), and has an excellent abrasion resistance and ductility as mentioned in detail later. Thereby, a frequency of replacement of each component part is reduced, which improves the service life of the injection molding machine 100.

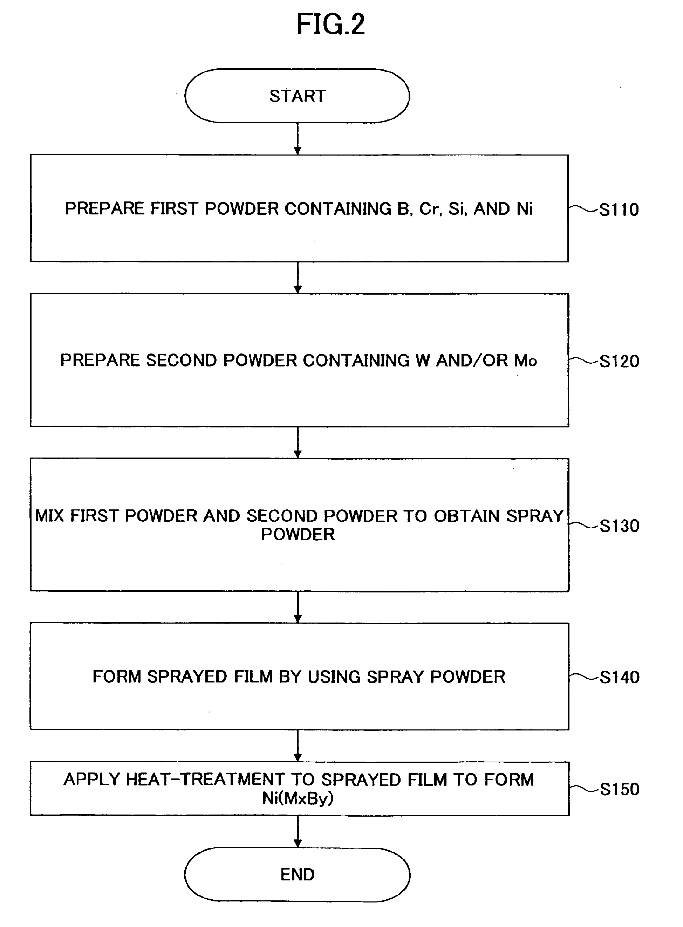

Next, a description will be given, with reference to FIG. 2, of a manufacturing method of the screw 112 according to the present embodiment. FIG. 2 is a flowchart of a manufacturing process of the screw 112 according to the present embodiment.

As illustrated in FIG. 2, the manufacturing process of the screw 112 includes: a process of preparing a first powder and a second powder, the first powder containing 5-9 weight % of boron (B), 9-11 weight % of chrome (Cr), 4-5 weight % of silicon (Si), and nickel (Ni) as a base material (step S110); a process of preparing a second powder containing a metal element M, the second powder being tungsten (W) and/or molybdenum (Mo) (step S120); a process of mixing the first powder and the second powder to obtain a spray powder having a molar ratio of M and B (boron) ranging from 0.75:1 to 1:1 (step S130); a process of forming a sprayed film on at least a portion of one of the screw tip, the check ring and the seal ring by spraying the spray powder (step S140); and a process of heat-treating the sprayed film to form a boride $Ni(M_xB_y)$ (step S150). It should be noted that the process of preparing the second powder is not always be performed after the process of preparing the first powder, and may be performed before the process of preparing the first powder. Additionally, the process of preparing the second power may be performed simultaneously with the process of preparing the first powder.

A description will be given below of each step in the manufacturing process of the screw 112.

(Step S110)

The first powder is prepared in step S110. The first power is made of a nickel (Ni) alloy containing 5%-9% of B (boron), 9%-11% of chrome (Cr) and 4%-5% of silicon (Si) in ratio by weight. The grain diameter of the first powder is not limited to, but preferably be in a range from 45 $\mu$m to 90 $\mu$m. A powder having such a grain diameter range can be easily obtained by screening using a sieve.

(Step S120)

Then, the second powder containing a metal element M is prepared. The metal element M is tungsten (W) and/or molybdenum (Mo). The grain diameter of the second powder is not limited to but preferably be in a range from 13.5 $\mu$m to 17.5 $\mu$m. A power having such as grain diameter range can be easily obtained by screening using a sieve. As mentioned above, the process of step S120 may be performed simultaneously with the process of step S110.

(Step S130)

Next, the first powder and the second powder are mixed to prepare a spray powder. It is desirable to mix the second power with the first power such that a ratio of the metal element M and B (boron) is set in a range from 0.75:1 to 1:1 in a molar ratio. There is no limitation in the mixing method.

(Step S140)

Subsequently, the sprayed film is formed on a surface of a processing object by using the spray powder prepared in step S130. The processing object is at least one of the screw tip 131, the check ring 140 and the seal ring 145. In the case of the screw tip 131, the position to which the spray process is applied is a contact position (refer to A of FIG. 1) where the tip part 132 contacts the check ring 140. In the case of the check ring 140, the positions at which the spray process is applied is a contact position (refer to B1 of FIG. 1) where the tip part 132 contacts the check ring 140 and a contact position (refer to C of FIG. 1) where the seal ring 145 contacts the check ring 140. In the case of the seal ring 145, the contact position at which the spray process is applied is a contact position (refer to D of FIG. 1) where the seal ring 145 contacts with the check ring 140. An area to which the spray process is applied is not limited to the above-mentioned areas, and the spray process may be applied to other areas. For example, a sprayed film may be formed in an area (refer to B2 of FIG. 1) on a side of the front end of the check ring 140 where the check ring 140 does not contact with the tip part 132 of the screw tip 131. Additionally, a sprayed film may be formed on a surface of the check ring 140 facing the diameter-reduced part 139 and/or on a surface of the check ring 140 facing the inner surface of the heating cylinder 111.

The method of spraying is not limited to a specific spray method, and a plasma spray, a frame spray, an explosion spray, etc., may be used. Additionally, a spray condition is not limited to a specific condition, and the spray may be performed under a normal condition of a conventional method. It should be noted that a pretreatment such as blast processing may be applied to the surface of the processing object before applying a spray process.

It should be noted that a density of each element, especially, boron (B) tungsten (W), or molybdenum (Mo), can be measured by the following method.

First, the sprayed film of a processing object is peeled from the applied position, and the sprayed film is broken into fragments. Then, the broken sprayed film is weighed and dissolved into an acid solution. A density of a desired element contained in the solution in which the sprayed film is dissolved is analyzed by an inductively coupled plasma-atomic emission spectrometry (ICP-AES).

(Step S150)

Then, the sprayed film is subjected to a heat treatment. The heat treatment of the sprayed film is applied in order to create a metal boride Ni(MxBy) by reacting boron and the metal element M in the sprayed film. The heat treatment condition of the sprayed film is not limited to a specific condition, and the heat treatment may be performed under a normal condition of a conventional heat treatment. For example, the heat treatment may be performed by maintaining the sprayed film at a temperature of equal to or higher than 1200°C in a vacuum atmosphere. Thereby, the metal boride Ni(MxBy) is created in the sprayed film.

The metal boride Ni(MxBy) contributes to an improvement of the abrasion resistance of the sprayed film. Particularly, according to the present embodiment, a metal tungsten (W) and/or a metal molybdenum (Mo) are added to the spray alloy. Those metals easily couples with boron (B) thermally, and, thus, the creation of the metal boride Ni(MxBy) can be relatively easy in the present embodiment.

It has been considered that in order to improve the abrasion resistance of the spray film, it is desirable to add boron and the metal element M to form the metal boride in the spray alloy as much as possible.

However, the inventors found that there is a risk of reduction in a tensile strength and reduction in ductility of the sprayed film if the sprayed film contains an excessive amount of metal boride Ni(MxBy). Thus, according to the present embodiment, an amount of boron (B) contained in the Ni-B base alloy is controlled to 6 wt% to 8 wt%. Thereby, a high abrasion resistance can be achieved without considerably reducing the ductility of the sprayed film.

A description is given below of results of evaluation tests.

(Test Sample No. 1)

A spray alloy was prepared according to the following method.

First, a Ni-B-Cr-Si alloy powder (purity 99.8%) as a first powder and a tungsten powder (purity 99.8%) as a second powder were prepared. The Ni-B-Cr-Si alloy powder had a grain diameter falling within a range of 45 $\mu$m to 90 $\mu$m. The tungsten powder had a grain diameter falling within a range of 13.5 $\mu$m to 17.5 $\mu$m. The composition of the first powder was Ni-6wt%B-10wt%Cr-4.5wt%.

Then, the first powder and the second powder were put in a mixer and mixed with each other. The first and second powder were mixed so that a molar ratio of tungsten and boron (W:B) in the mixture was 1:1.

Thereafter, a plasma spray was applied to a substrate using the thus-prepared mixed alloy powder. The substrate used was made of SCM 440 (Cr-Mo steel). Before applying a spray, a blast processing was applied to a surface of the substrate to be subjected to the plasma spray.

The plasma spray was performed under the following normal condition.

Current: 500 A
Voltage: 65 V
Carrier gas (argon gas) flow: 18.5 SCFH
Hydrogen flow for fuel supply: 15 SCFH

The target of thickness of the sprayed film was 1 mm.

Then, the obtained sprayed film was maintained at a high-temperature (equal to or higher than 1200°C) in a vacuum atmosphere to perform a heat treatment. After the heat treatment, it was confirmed that tungsten and boron in the sprayed film had reacted with each other and a boride (WB) had been created in the sprayed film.

The thus-obtained sprayed film was set as a test sample No. 1.

The spray powder used to prepare the test sample No. 1 was the mixture of the first powder and the second powder (Ni-6wt%-10wt%Cr-4.5wt%Si + W (B/W=1:1 molar ratio)). Thus, the content of boron (B) in the first powder was 6 wt%.

(Test Sample No. 2)

A test Sample No. 2 was prepared by the same method as the test sample No. 1 except that the composition of the first powder was set to Ni-8wt%B-10wt%Cr-4.5wt%. Other conditions were the same as that of the test sample No. 1.

The spray powder used to prepare the test sample No. 2 was the mixture of the first powder and the second powder (Ni-8wt%-10wt%Cr-4.5wt%Si + W (B/W=1:1 mol ratio)). Thus, the content of boron (B) in the first powder was 8 wt%.

The difference between the test sample No. 2 and the test sample No. 1 was in the content of boron (B) in the first powder. Specifically, the test sample No. 2 was prepared by setting an amount of boron (B) included in the first powder to 8 wt%, whereas the test sample No. 1 was prepared by setting an amount of boron (B) included in the first powder to 6 wt%.

(Comparison Sample No. 1)

A comparison sample No. 1 was prepared according to the same method as the test sample No. 1. However, in the preparation of the comparison sample No. 1, the composition of the first powder was set to Ni-3wt%B-10wt%Cr-4.5wt%. Other conditions were the same as the conditions for preparing the test sample No. 1.

The spray powder used to prepare the comparison sample No. 1 was the mixture of the first powder and the second powder (Ni-3wt%-10wt%Cr-4.5wt%Si + W (B/W=1:1 mol ratio)). Thus, the content of boron (B) in the first powder was 3 wt%.

The difference between the comparison sample No. 1 and the test sample No. 1 was in the amount of content of boron (B) in the first powder. Specifically, the comparison sample No. 1 was prepared by setting an amount of boron (B) included in the first powder to 3 wt%, whereas the test sample No. 1 was prepared by setting an amount of boron (B) included in the first powder to 6 wt%.

(Comparison Sample No. 2)

A comparison sample No. 2 was prepared according to the same method as the test sample No. 1. However, in the preparation of the comparison sample No. 2, the composition of the first powder was set to Ni-10wt%B-10wt%Cr-4.5wt%. Other conditions were the same as the conditions for preparing the test sample No. 1.

The spray powder used to prepare the comparison sample No. 2 was the mixture of the first powder and the second powder (Ni-10wt%-10wt%Cr-4.5wt%Si + W (B/W=1:1 mol ratio)). Thus, the content of boron (B) in the first powder was 10 wt%.

The difference between the comparison sample No. 2 and the test sample No. 1 was in the amount of content of boron (B). Specifically, the comparison sample No. 2 was prepared by setting an amount of boron (B) included in the first powder to 10 wt%, whereas the test sample No. 1 was prepared by setting an amount of boron (B) included in the first powder to 6 wt%.

Evaluation tests were performed using the above-mentioned test samples No. 1 and No. 2 and comparison samples No. 1 and No. 2. The evaluation tests were performed according to the following method using a comparative abrasion quantity S as an index.

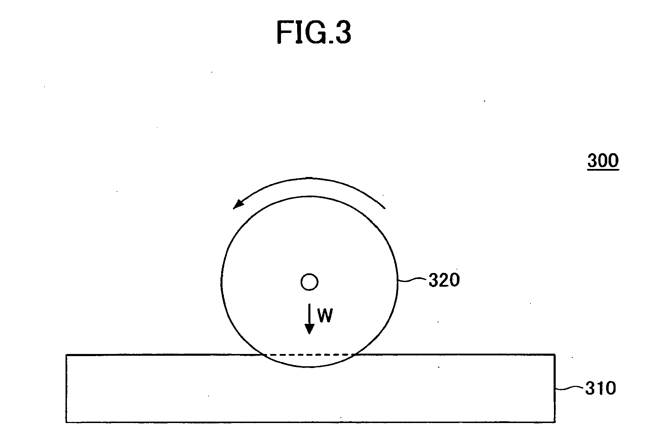

FIG. 3 illustrates an outline structure of a test apparatus 300, which was used to perform the evaluation test.

The test apparatus 300 includes a ring 320 arranged above a sample 310. The ring 320 is rotated at a revolution speed of 2.4 m/sec in the state where the ring 320 is pressed against the sample 310 with a load W. After a predetermined time has passed, the rotation of the ring 320 is stopped, and the abrasion volume V of the sample 310 is measured.

The comparative abrasion quantity S can be calculated according to the following formula (1) using the abrasion volume V.

$$S = V/W \times L \qquad (1)$$

where L is a slide distance of the ring 320, that is, a distance of slide of the ring 320 on the sample 310. The slide distance L can be calculated based on the test time during which the ring 320 is rotated and pressed against the sample 310.

According to the formula (1), it can be appreciated that the comparative abrasion quantity S can be an index of abrasion resistance. That is, smaller the comparative abrasion quantity S, higher the abrasion resistance of the sample 310.

It should be noted that no lubricant is used in the evaluation test.

The above-mentioned test samples No. 1 and No. 2 and comparative samples No. 1 and No. 2 were set as the sample 310, and the test was performed on each of the test samples No. 1 and No. 2 and comparative samples No. 1 and No. 2. The results of the test are indicated in the following Table 1.

Table 1

| | Boron Content in First Powder | Comparative Abrasion Quantity S $(mm^2/kgf)$ | Deflective Strength (Mpa) |
|---|---|---|---|
| Test No. 1 | 6 wt% | $5.15 \times 10^{-9}$ | 1806 |
| Test No. 2 | 8 wt% | $4.15 \times 10^{-9}$ | 1573 |
| Comp No. 1 | 3 wt% | $3.45 \times 10^{-9}$ | 930 |
| Comp No. 2 | 10 wt% | $6.90 \times 10^{-9}$ | 876 |

In Table 1, "Test No. 1" indicates the "test sample No. 1", "Test No. 2" the "test sample No. 2", "Comp No. 1" the "comparison sample No. 1", and "Comp No. 2" the "comparison sample No. 2".

According to the results of the evaluation test for abrasion resistance, it was appreciated that the test samples No. 1 and No. 2 have abrasion resistances almost the same as the abrasion resistance of the comparison sample No. 2. It was found on the other hand that the comparison sample No. 1 is inferior in abrasion resistance to other samples. The comparison sample No. 1 was prepared using the spray alloy containing boron (B) of 3 wt%, which was less than the spray alloy used for other samples. Thus, it was considered that an amount of tungsten boride produced by the heat treatment in the comparison example No. 1 is smaller than other samples and a sufficient improvement in abrasion resistance was not obtained.

Next, ductility evaluation tests were performed using the above-mentioned samples.

The evaluation of ductility was performed by a three-point bending test. Specifically, a load was applied to each sample with a crosshead moving speed of 1 mm/min, and a destruction stress (deflective strength) was acquired from the cross-sectional area of the sample and a load applied to the sample when the sample was destructed. The distance between supporting points of the sample was set to 20 mm. The deflective strength was calculated as an average value of four pieces of the same sample. The results of the ductility tests are indicated also in the above-mentioned Table 1.

It was appreciated from the results of the ductility evaluation tests that the deflective strengths of the test samples No. 1 and No. 2 were significantly improved as compared to the comparison samples No. 1 and No. 2. It was considered that a large amount of metal boride was produced by the heat treatment in the comparison sample No. 2. On the other hand, it was also considered that excessive production of the metal boride was prevented and degradation in the ductility was suppressed significantly in the test samples No. 1 and No. 2.

As mentioned above, it was confirmed that a sprayed film having excellent abrasion resistance and ductility can be obtained by using the spray alloy according to the present embodiment.

**Claims**

1.  A manufacturing method of a screw, comprising:

    preparing a first powder and a second powder, the first powder containing 5 wt% to 9 wt% of boron (B), 9 wt% to 11 wt% of chrome (Cr), 4 wt% to 5 wt% of silicon (Si), and nickel (Ni), the second powder containing a metal element M, the second powder being tungsten (W) and/or molybdenum (Mo);
    mixing the first powder and the second powder to obtain a spray powder having a molar ratio of M and B ranging from 0.75:1 to 1:1;
    forming a sprayed film on at least a portion of one of a screw tip (131), a check ring (140) and a seal ring (145) by spraying the spray powder; and
    heat-treating the sprayed film to form a boride Ni ($M_xB_y$).

2.  The manufacturing method according to claim 1, wherein a grain diameter of the first powder ranges from 45 $\mu$m to 90 $\mu$m, and/or a grain diameter of the second powder ranges from 13.5 $\mu$m to 17.5 $\mu$m.

3.  The manufacturing method according to claim 1 or 2, wherein the sprayed film is provided on at least one of a contacting position of the screw tip (112) where the screw tip (131) contacts with the front end of the check ring (140), a contact position of the check ring (140) where the front end of the check ring (140) contacts with the screw tip (131), a contact position of the check ring (140) where the rear end of the check ring (140) contacts with the seal ring (145), and a contact position of the seal ring (145) where the seal ring (145) contacts with the rear end of the check ring (140).

**4.** A screw comprising:

a screw tip (131);
a screw body (113);
a seal ring (145) provided between the screw tip (131) and the screw body (113);
a check ring (140) including a front end and a rear end and arranged so that the front end is on a side of the screw tip and the rear end is on a side of the seal ring; and
a sprayed film provided on at least one of a contacting position of the screw tip (131) where the screw tip contacts with the front end of the check ring (140), a contact position of the check ring (140) where the front end of the check ring (140) contacts with the screw tip (131), a contact position of the check ring (140) where the rear end of the check ring (140) contacts with the seal ring (145), and a contact position of the seal ring (145) where the seal ring (145) contacts with the rear end of the check ring (140), **characterized in that** the sprayed film containing boride Ni(MxBy), where M is molybdenum and/or tungsten, and an amount of boron (B) is in a range of 6 wt% to 8 wt%.

## Patentansprüche

**1.** Herstellungsverfahren für eine Schnecke, welches Folgendes aufweist:

Zubereiten eines ersten Pulvers und eines zweiten Pulvers, wobei das erste Pulver 5 Gewichts-% bis 9 Gewichts-% Bor (B), 9 Gewichts-% bis 11 Gewichts-% Chrom (Cr), 4 Gewichts-% bis 5 Gewichts-% Silizium (Si) und Nickel (Ni) enthält, wobei das zweite Pulver ein Metallelement M enthält, wobei das zweite Pulver Wolfram (W) und/oder Molybdän (Mo) ist;
Mischen des ersten Pulvers und des zweiten Pulvers, um ein Sprühpulver mit einem molaren Verhältnis von M und B im Bereich von 0,75:1 bis 1:1 zu erhalten;
Formen eines Sprühfilms auf zumindest einem Teil einer Schneckenspitze (131) oder einem Rückschlagelementring (140) oder einem Dichtungsring (145) durch Aufsprühen des Sprühpulvers; und
Wärmebehandeln des gesprühten Films, um ein Borid Ni (MxBy) zu bilden.

**2.** Herstellungsverfahren nach Anspruch 1, wobei ein Korndurchmesser des ersten Pulvers in einem Bereich von 45 $\mu$m bis 90 $\mu$m liegt und/oder wobei ein Korndurchmesser des zweiten Pulvers in einem Bereich von 13,5 $\mu$m bis 17,5 $\mu$m liegt.

**3.** Herstellungsverfahren nach Anspruch 1 oder 2, wobei der gesprühte Film auf einer Kontaktposition der Schneckenspitze (112), wo die Schneckenspitze (131) mit dem vorderen Ende des Rückschlagelementrings (140) in Kontakt kommt, und/oder einer Kontaktposition des Rückschlagelementrings (140), wo das vordere Ende des Rückschlagelementrings (140) mit der Schneckenspitze (131) in Kontakt kommt, und/oder einer Kontaktposition des Rückschlagelementrings (140), wo das hintere Ende des Rückschlagelementrings (140) mit dem Dichtungsring (145) in Kontakt kommt, und/oder einer Kontaktposition des Dichtungsrings (145), wo der Dichtungsring (145) mit dem hinteren Ende des Rückschlagelementrings (140) in Kontakt kommt, vorgesehen ist.

**4.** Schnecke, die Folgendes aufweist:

eine Schneckenspitze (131);
einen Schneckenkörper (113);
einen Dichtungsring (145), der zwischen der Schneckenspitze (131) und
dem Schneckenkörper (113) vorgesehen ist;
einen Rückschlagelementring (140), der ein vorderes Ende und ein hinteres Ende aufweist, die so angeordnet sind, dass das vordere Ende auf einer Seite der Schneckenspitze ist, und dass das hintere Ende auf einer Seite des Dichtungsrings ist; und
einen Sprühfilm, der an einer Kontaktposition der Schneckenspitze (131), wo die Schneckenspitze (131) mit dem vorderen Ende des Rückschlagelementrings (140) in Kontakt kommt, und/oder einer Kontaktposition des Rückschlagelementrings (140), wo das vordere Ende des Rückschlagelementrings (140) mit der Schneckenspitze (131) in Kontakt kommt,
und/oder einer Kontaktposition des Rückschlagelementrings (140), wo das hintere Ende des Rückschlagelementrings (140) mit dem Dichtungsring (145) in Kontakt kommt, und/oder einer Kontaktposition des Dichtungsrings (145), wo der Dichtungsring (145) mit dem hinteren Ende des Rückschlagelementrings (140) in Kontakt kommt, vorgesehen ist,
**dadurch gekennzeichnet, dass**
der Sprühfilm Borid Ni (MxBy) ist, wobei M Molybdän und/oder Wolfram ist und wobei eine Menge an Bor (B) im Bereich von 6 Gewichts-% bis 8 Gewichts-% liegt.

## Revendications

1. Procédé de fabrication d'une vis comprenant :

   préparer une première poudre et une seconde poudre, la première poudre contenant de 5 à 9 % en poids de bore (B), de 9 à 11% en poids de chrome (Cr), de 4 à 5% en poids de silicium (Si) et du nickel (Ni), la seconde poudre contenant un élément métallique M, la seconde poudre étant en tungstène (W) et/ou en molybdène (Mo) ;
   mélanger la première poudre et la seconde poudre pour obtenir une poudre de pulvérisation ayant un rapport molaire entre M et B dans une plage de 0,75/1 à 1/1 ;
   former un film pulvérisé sur au moins une partie de l'un d'une pointe de vis (131), d'un anneau de contrôle (140) et d'une bague de scellement (145) en pulvérisant la poudre de pulvérisation ; et
   traiter thermiquement le film pulvérisé pour former un borure de Ni(MxBy).

2. Procédé de fabrication selon la revendication 1, dans lequel le diamètre de grain de la première poudre est dans une plage de 45 à 90 $\mu$m, et/ou le diamètre de grain de la seconde poudre est dans une plage de 13,5 à 17,5 $\mu$m.

3. Procédé de fabrication selon la revendication 1 ou 2, dans lequel le film pulvérisé est fourni sur au moins l'une d'une position de contact de la pointe de vis (112) à laquelle la pointe de vis (131) est en contact avec l'extrémité avant de l'anneau de contrôle (140), d'une position de contact de l'anneau de contrôle (140) à laquelle l'extrémité avant de l'anneau de contrôle (140) est en contact avec la pointe de vis (131), d'une position de contact de l'anneau de contrôle (140) à laquelle l'extrémité arrière de l'anneau de contrôle (140) contacte la bague de scellement (145), et d'une position de contact de la bague de scellement (145) à laquelle la bague de scellement (145) est en contact avec l'extrémité arrière de l'anneau de contrôle (140).

4. Vis comprenant :

   une pointe de vis (131) ;
   un corps de vis (113) ;
   une bague de scellement (145) prévu entre la pointe de vis (131) et le corps de vis (113) ;
   un anneau de contrôle (140) ayant une extrémité avant et une extrémité arrière et agencé de sorte que son extrémité avant est du côté de la pointe de vis et son extrémité arrière est du côté de la bague de scellement ; et
   un film pulvérisé prévu sur au moins l'un d'une position de contact de la pointe de vis (131) à laquelle la pointe de vis entre en contact avec l'extrémité avant de l'anneau de contrôle (140), d'une position de contact de l'anneau de contrôle (140) à laquelle l'extrémité avant de la bague de contrôle (140) entre en contact avec la pointe de vis (131), d'une position de contact de l'anneau de contrôle (140) a laquelle l'extrémité arrière de l'anneau de contrôle (140) entre en contact avec la bague de scellement (145) et d'une position de contact de la bague de scellement (145) à laquelle la bague de scellement (145) entre en contact avec l'extrémité arrière de l'anneau de contrôle (140),
   **caractérisée en ce que** le film pulvérisé contient du borure de Ni(MxBy), où M est du molybdène et/ou du tungstène et la quantité de bore (B) est dans la plage de 6 à 8 % en poids.

FIG.1

EP 2 455 207 B1

# FIG.2

START

PREPARE FIRST POWDER CONTAINING B, Cr, Si, AND Ni ~S110

PREPARE SECOND POWDER CONTAINING W AND/OR Mo ~S120

MIX FIRST POWDER AND SECOND POWDER TO OBTAIN SPRAY POWDER ~S130

FORM SPRAYED FILM BY USING SPRAY POWDER ~S140

APPLY HEAT-TREATMENT TO SPRAYED FILM TO FORM Ni(MxBy) ~S150

END

# FIG.3

300

320

W

310

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007290284 A
- JP 2070051 A

- WO 9712743 A1